# EUROPÄISCHE PATENTSCHRIFT

(11) **EP 2 106 509 B1**
(45) Veröffentlichungstag und Bekanntmachung des Hinweises auf die Patenterteilung: **04.08.2010**
(21) Anmeldenummer: 08759291.1
(22) Anmeldetag: 19.06.2008
(51) Int. Cl.: F16D 55/22, F16D 65/18, F16D 55/226

(54) **SCHEIBENBREMSE FÜR EIN KRAFTFAHRZEUG UND GEHÄUSE HIERFÜR**
DISK BRAKE FOR A MOTOR VEHICLE AND HOUSING FOR THE SAME
FREIN À DISQUE POUR UN VÉHICULE AUTOMOBILE ET SON BOÎTIER

(30) Priorität: 28.06.2007 DE 102007029927
(43) Veröffentlichungstag der Anmeldung: 07.10.2009
(73) Patentinhaber: Lucas Automotive GmbH, 56070 Koblenz (DE)
(72) Erfinder: ERBEN, Ralf, 56132 Kemmenau (DE); HERBERTS, Michael, 56072 Koblenz (DE)
(74) Vertreter: Thum, Bernhard
(86) Internationale Anmeldenummer: PCT/EP2008/004955
(87) Internationale Veröffentlichungsnummer: WO 2009/000463

(56) Entgegenhaltungen:
- EP-A- 1 498 633
- DE-A1- 4 038 032
- DE-A1- 19 648 581
- DE-A1-102006 056 346

## Beschreibung

Die vorliegende Erfindung betrifft eine Scheibenbremse für ein Kraftfahrzeug mit einem Gehäuse, einem in dem Gehäuse entlang einer Längsachse verlagerbaren Kolben und einer an dem Kolben angreifenden oder mit diesem in Eingriff bringbaren Mutter-Spindelanordnung, wobei die Mutter-Spindelanordnung in dem Gehäuse angeordnet ist und sich an einer Stützfläche des Gehäuses über einer Lageranordnung kraftübertragend abstützt.

Derartige Scheibenbremsen sind aus dem Stand der Technik bereits bekannt. So wird die Mutter-Spindelanordnung zum Einen für einen Nachstellmechanismus genutzt, um einen wachsenden Verschleiß an den Bremsbelägen auszugleichen, damit das Lüftspiel der Scheibenbremse weitgehend konstant gehalten werden kann. Andererseits wird die Mutter-Spindelanordnung bei modernen Bremsentypen oftmals auch dazu genutzt, neben dem Verschleißausgleich eine Feststellbremsfunktion zu realisieren. Hierzu wird die Spindel drehangetrieben, so dass die Mutter auf der Spindel axial verlagert werden kann. Nach einer hydraulischen Vorspannung des Kolbens zum Erzielen eines der Feststellbremswirkung gerecht werdenden Bremseffekts wird die Mutter entsprechend nachverlagert, so dass sie wieder in Anlage mit dem Kolben gebracht wird. In der Folge kann der Kolben hydraulisch druckentlastet werden. Er kann sich jedoch nicht in seine bremswirkungsfreie Ausgangsstellung zurückbewegen, sondern wird im Wesentlichen in der beabsichtigten Feststellbremsstellung über die Mutter der Mutter-Spindelanordnung gehalten. Um eine Drehbewegung der Mutter zu vermeiden ist die Gewindepaarung zwischen der Mutter und der Spindel entweder selbsthemmend ausgebildet oder die Spindel wird drehfixiert.

Eine derartige Lösung ist beispielsweise auch aus dem Stand der Technik gemäß US 5,348,123 bekannt. Es hat sich gezeigt, dass die Spindel zur Vermeidung von unerwünschten Reibungswiderständen vorteilhafterweise über eine Lageranordnung reibungsarm in dem Gehäuse zu lagern ist. So zeigt das Dokument US 5,348,123 die Verwendung eines Axialwälzlagers als derartige Lageranordnung. Allerdings kann es bei der Abstützung der Lageranordnung an dem Gehäuse zu Problemen kommen. Dies liegt insbesondere daran, dass das Gehäuse üblicherweise aus Gussmaterial hergestellt wird, wobei die entstehenden Oberflächen oftmals Unebenheiten aufweisen. Liegt nun die Lageranordnung an einer derartigen unebenen Oberfläche am Gehäuse der Scheibenbremse an, so kann es punktuell oder bereichsweise zu unterschiedlichen Belastungssituationen kommen, die die Lebensdauer der Lageranordnung beeinträchtigen können.

Es ist eine Aufgabe der vorliegenden Erfindung, eine Scheibenbremse der eingangs bezeichneten Art und ein Gehäuse hierfür bereitzustellen, bei welchen die vorstehend beschriebenen Probleme vermieden werden.

Diese Aufgabe wird durch eine Scheibenbremse der eingangs bezeichneten Art gelöst, bei der vorgesehen ist, dass die Stützfläche mit einer gegenüber einem benachbarten Gehäusebereich vorspringenden definierten Anlagefläche ausgebildet ist, an der die Lageranordnung anliegt.

Durch Bereitstellen einer vorspringenden definierten Anlagefläche kann vermieden werden, dass die Lageranordnung unregelmäßig an dem Gehäuse anliegt und so aufgrund unterschiedlicher Belastungssituationen hinsichtlich ihrer Lebensdauer beeinträchtigt wird.

Vorzugsweise ist bei der Erfindung vorgesehen, dass die Stützfläche von der Stimfläche eines in axialer Richtung von dem Gehäuse vorspringenden Anlagerings oder einer Anlagestufe gebildet ist. Ein derartiger Anlagering oder eine Anlagestufe können bereits bei der Herstellung des Gehäuses, beispielsweise durch ein Gießverfahren, ausgebildet werden. Sie können aber auch durch nachträgliche Bearbeitung des Gehäuses, beispielsweise durch Anbringen eines Einstichs oder dergleichen hergestellt werden. In diesem Zusammenhang sieht eine Weiterbildung der Erfindung vor, dass der Anlagering oder die Anlagestufe benachbart zu einer Hinterschneidung in dem Gehäuse angeordnet ist.

Gemäß verschiedenen Ausführungsformen der Erfindung kann vorgesehen sein, dass die Lageranordnung ein Wälzlager, insbesondere ein Axiallager, aufweist. So ist es möglich, dass die Lageranordnung ein Rollen-, Kugel- oder Nadellager aufweist. Ferner kann in diesem Zusammenhang vorgesehen sein, dass die Lageranordnung mit einem Lagerring oder einer Lagerscheibe an der Stützfläche anliegt.

Eine Weiterbildung der Erfindung sieht vor, dass die Stützfläche gleich groß wie oder vorzugsweise kleiner ist als die ihr zugewandte Fläche des Lagerrings.

Zum Verbessern der Oberflächengüte an der Stützfläche sieht eine Weiterbildung der Erfindung vor, dass die Stützfläche, insbesondere durch Nachbearbeitung, eben ausgebildet ist. Die Nachbearbeitung kann beispielsweise spanabhebend erfolgen.

Die Erfindung betrifft ferner ein Gehäuse für eine Scheibenbremse der vorstehend beschriebenen Art, wobei dieses eine Stützfläche für eine Lageranordnung aufweist, wobei die Stützfläche mit einer gegenüber einem benachbarten Gehäusebereich vorspringenden definierten Anlagefläche ausgebildet ist, an der die Lageranordnung anliegt.

Die Erfindung wird im Folgenden anhand eines Ausführungsbeispiels mit Bezugnahme auf die beiliegenden Zeichnungen beschrieben. Es stellen dar:
- Fig. 1: eine Schnittansicht einer erfindungsgemäßen Scheibenbremse und
- Fig.2: eine Detailansicht des Gehäuses dieser Scheibenbremse.

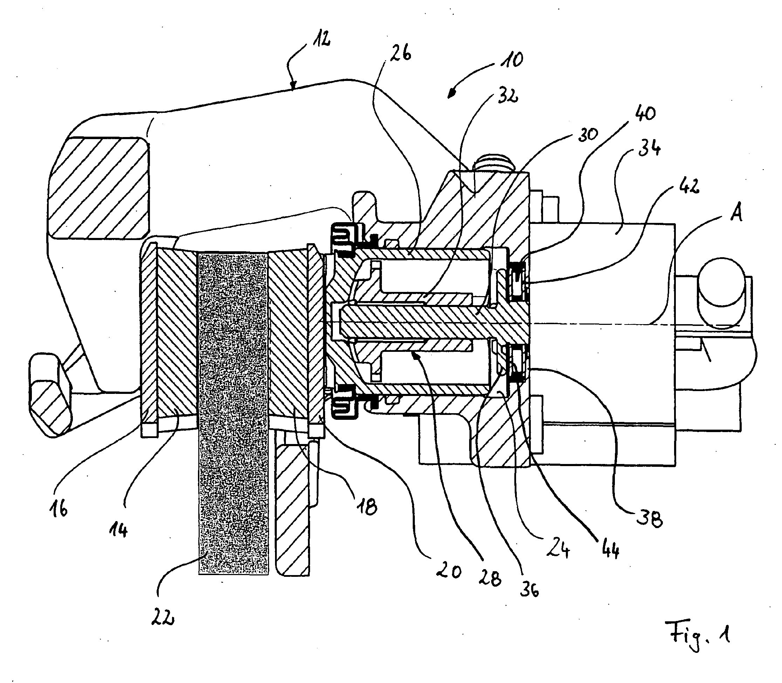

In Fig.1 ist eine erfindungsgemäße Scheibenbremse im Schnitt dargestellt und allgemein mit 10 bezeichnet. Diese umfasst ein sattelförmiges Gehäuse 12, in dem ein erster Bremsbelag 14 an einem bewegbar gelagerten Bremsbelagträger 16 und ein zweiter Bremsbelag 18 an einem ebenfalls bewegbaren Bremsbelagträger 20 angeordnet sind. Die beiden Bremsbeläge 14 und 18 sind beidseits einer mit einem nicht gezeigten Rad drehfest verbundenen Bremsscheibe 22 angeordnet. Sie sind nach dem Schwimmsattelprinzip gelagert, so dass gewährleistet ist, dass über beide Bremsbeläge 14 und 18 auf die Bremsscheibe 22 bei Betätigung der Bremse 10 eine abbremsenden Klemmkraft ausgeübt wird. Die Funktionsweise einer solchen Scheibenbremse nach dem Schwimmsattelbetrieb ist allgemein bekannt und wird hier nicht im Detail beschrieben.

In dem Gehäuse 12 ist eine Fluidkammer 24 ausgebildet, die über einen nicht gezeigten Fluidanschluss mit hydraulischen Druckfluid beschickt werden kann. In der Fluidkammer 24 ist ein Bremskolben 26 in Richtung einer Längsachse A verlagerbar geführt. Der Bremskolben 26 kann durch Beschickung der Fluidkammer 24 mit Hydraulikfluid entlang der Längsachse A verlagert werden, um so den Bremsbelagträger 20 und den Bremsbelag 18 auf die Bremsscheibe 22 zuzudrücken. Auch dies erfolgt in herkömmlicher Weise in Reaktion auf eine Bremspedalbetätigung oder nach Maßgabe eines elektronischen Steuerprogramms.

Innerhalb der Fluidkammer 24 ist ferner eine Mutter-Spindelanordnung 28 angeordnet, die eine drehbar jedoch in axialer Richtung ortsfeste Spindel 30 und eine mit dieser in Gewindeeingriff stehende Mutter 32 aufweist. Die Spindel 30 kann über eine Antriebseinrichtung 34 motorisch drehangetrieben werden. Daraufhin verlagert sich die Mutter 32 in axialer Richtung je nach Drehsinn in Fig.1 nach links oder nach rechts. Die Mutter 32 ist drehfest in dem Kolben 26 aufgenommen. Die Gewindepaarung zwischen der Spindel 30 und der Mutter 32 ist selbsthemmend.

Die Spindel 30 weist einen Stützflansch 36 auf, der sich in radialer Richtung über den gesamten Umfang der Spindel 30 herum erstreckt. Zwischen dem Stützflansch 36 und einem Gehäusekragen 38 ist ein Nadellager 40 vorgesehen. Das Nadellager 40 weist in herkömmlicher Weise nadelförmige Wälzkörper auf, die zwischen zwei Lagerringen 42 und 44 angeordnet sind.

Die Scheibenbremse funktioniert wie folgt. Im Rahmen einer Betriebsbremsung wird die Fluidkammer 24 mit Hydraulikfluid beschickt, so dass der Kolben 26 in Richtung der Längsachse A verlagert wird und so unter Vermittlung der Bremsbeläge 14 und 18 eine Bremskraft auf die Bremsscheibe 22 ausgeübt wird. Bei Abschluss der Bremsung wird der Druck in der Fluidkammer 24 wieder abgebaut, so dass sich der Kolben 26 in seine Ausgangsstellung zurückbewegen kann.

Im Rahmen einer Feststellbremssituation wird der Kolben 26 ebenfalls hydraulisch vorgespannt bis zumindest eine die Feststellbremskraft erfordernde Klemmkraft an der Bremsscheibe 22 erreicht wird. Sodann wird durch Drehantreiben der Spindel 30 und Verlagerung der Mutter 32 letztere in Anlage mit dem Bremskolben 26 gebracht, so dass sich dieser rückseitig, das heißt mit seiner der Fluidkammer 24 zugewandten Seite an der Mutter abstützen kann. Die Mutter stützt sich ihrerseits über die selbsthemmende Gewindepaarung an der Spindel 30 ab und die Spindel 30 stützt sich über das Axiallager 40 an dem Gehäusekragen 38 ab. Der Kolben 26 wird somit in einer Feststellbremsposition blockiert

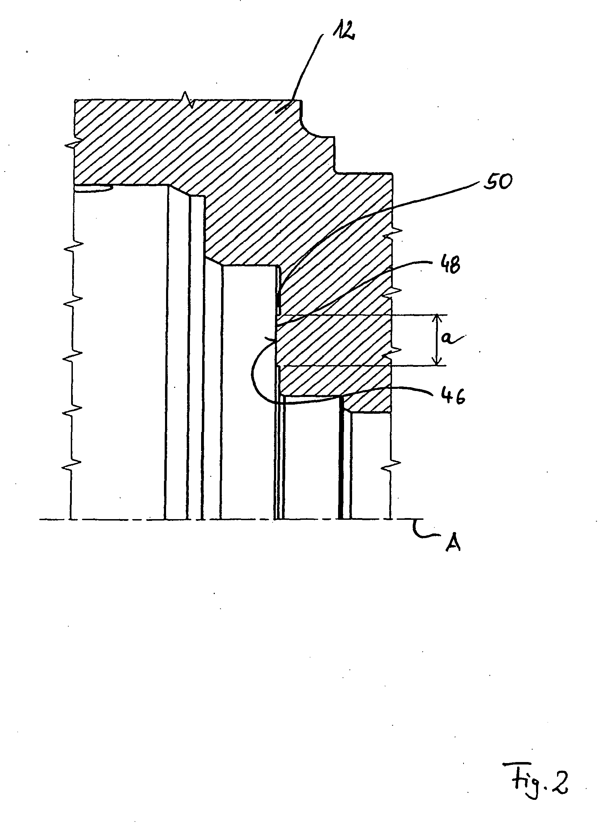

In diesem Zusammenhang hat sich gezeigt, dass Unebenheiten im Bereich der Stützfläche am Gehäusekragen 38 zu einer reduzierten Lebensdauer des Axiallagers 40 führen können, weil dieses punktuell oder bereichsweise unterschiedlich stark belastet wird. Um diesem Problem entgegen zu wirken, ist vorgesehen, dass das Gehäuse 12 der Scheibenbremse 10 eine Stützfläche 46(siehe Fig.2) aufweist, die sich in radialer Richtung über den Abschnitt a erstreckt. Die Stützfläche 46 ist gegenüber dem umgebenden Gehäusebereich erhaben ausgebildet, das heißt sie springt von den sie umgebenden Gehäuseflächen in axialer Richtung vor.

Fig.2 zeigt eine Schnittansicht. Daraus ergibt sich, dass wie Stützfläche einen vorspringenden Anlagering 48 des Gehäuses 12 begrenzt. Die Stützfläche 46 ist maschinell nachbearbeitet worden, insbesondere spanabhebend, um ihre Oberflächengüte zu verbessern. Durch den vorspringenden Anlagering ergibt sich eine Hinterschneidung 50 im Gehäuse 12. An der Stützfläche 46 kann der Lagerring 42 des Wälzlagers 40 anliegen und sich über den gesamten Umfang gleichmäßig abstützen.

Durch die gleichmäßige Abstützung des Lagerrings 42 an der Stützfläche 46 wird gegenüber herkömmlichen Gestaltungen ohne vorspringende definierte Stützfläche aufgrund der Vermeidung von punktuellen Lastspitzen am Lagerring die Lebensdauer der Lageranordnung 40 erheblich erhöht. Dies liegt insbesondere daran, dass aufgrund der regelmäßigen Stützfläche 42 eine gleichmäßige Lasteinleitung in das Axiallager gewährleistet ist.

## Patentansprüche

1. Scheibenbremse (10) für ein Kraftfahrzeug mit,
- einem Gehäuse (12),
- einem in dem Gehäuse (12) entlang einer Längsachse (A) verlagerbaren Kolben und
- einer an dem Kolben (26) angreifenden oder mit diesem in Eingriff bringbaren Mutter-Spindelanordnung (28),
wobei die Mutter-Spindelanordnung (28) in dem Gehäuse (12) angeordnet ist und sich an einer Stützfläche (46) des Gehäuses (12) über einer Lageranordnung (40) kraftübertragend abstützt,
**dadurch gekennzeichnet, dass** die Stützfläche von einer gegenüber einem benachbarten Gehäusebereich vorspringenden definierten Anlagefläche (46) ausgebildet ist, an der die Lageranordnung (40) anliegt.

2. Scheibenbremse (10) nach Anspruch 1,
**dadurch gekennzeichnet, dass** die Stützfläche (46) von der Stirnfläche eines in axialer Richtung von dem Gehäuse vorspringenden Anlagerings (48) oder einer Anlagestufe gebildet ist.

3. Scheibenbremse (10) nach Anspruch 2,
**dadurch gekennzeichnet, dass** der Anlagering (48) oder die Anlagestufe benachbart zu einer Hinterschneidung (50) in dem Gehäuse (12) angeordnet ist.

4. Scheibenbremse (10) nach einem der Ansprüche 1 bis 3,
**dadurch gekennzeichnet, dass** die Lageranordnung (40) ein Wälzlager, insbesondere ein Axiallager, aufweist.

5. Scheibenbremse (10) nach Anspruch 4,
**dadurch gekennzeichnet, dass** die Lageranordnung (40) ein Rollen-, Kugel- oder Nadellager aufweist.

6. Scheibenbremse (10) nach einem der vorangehenden Ansprüche,
**dadurch gekennzeichnet, dass** die Lageranordnung (40) mit einem Lagerring (42) an der Stützfläche (46) anliegt.

7. Scheibenbremse (10) nach Anspruch 6,
**dadurch gekennzeichnet, dass** die Stützfläche (46) gleich groß wie oder vorzugsweise kleiner ist als die ihr zugewandte Fläche des Lagerrings (42).

8. Scheibenbremse (10) nach einem der vorangehenden Ansprüche,
**dadurch gekennzeichnet, dass** die Stützfläche (46), insbesondere durch Nachbearbeitung, eben ausgebildet ist.

9. Gehäuse (12) für eine Scheibenbremse (10) nach einem der vorangehenden Ansprüche, **gekennzeichnet durch** eine Stützfläche (46) für eine Lageranordnung (40), wobei die Stützfläche (46) von einer gegenüber einem benachbarten Gehäusebereich vorspringenden definierten Anlagefläche (46) ausgebildet ist, an der die Lageranordnung (40) anliegt.

## Claims

1. Disc brake (10) for a motor vehicle having
- a housing (12),
- a piston which is movable in the housing (12) along a longitudinal axis (A) and
- a nut-spindle arrangement (28) which acts on the piston (26) or can be brought into engagement with the piston,
wherein the nut-spindle arrangement (28) is arranged in the housing (12) and is workingly supported via a bearing arrangement (40) on a support surface (46) of the housing (12),
**characterised in that** the support surface is formed by a defined contact surface (46) which projects with respect to an adjacent housing region and against which the bearing arrangement (40) bears.

2. Disc brake (10) according to Claim 1,
**characterised in that** the support surface (46) is formed by the end surface of a contact ring (48) projecting from the housing in the axial direction or by a contact step.

3. Disc brake (10) according to Claim 2,
**characterised in that** the contact ring (48) or the contact step is arranged adjacent to an undercut (50) in the housing (12).

4. Disc brake (10) according to any one of Claims 1 to 3,
**characterised in that** the bearing arrangement (40) comprises an antifriction bearing, in particular a thrust bearing.

5. Disc brake (10) according to Claim 4,
**characterised in that** the bearing arrangement (40) comprises a roller, ball or needle bearing.

6. Disc brake (10) according to any one of the preceding Claims,
**characterised in that** the bearing arrangement (40) bears against the support surface (46) with a bearing ring (42).

7. Disc brake (10) according to Claim 6,
**characterised in that** the support surface (46) is the same size as or preferably smaller than the surface of the bearing ring (42) which faces it.

8. Disc brake (10) according to any one of the preceding Claims,
**characterised in that** the support surface (46) is formed in a plane manner, in particular by reworking.

9. Housing (12) for a disc brake (10) according to any one of the preceding Claims,
**characterised by** a support surface (46) for a bearing arrangement (40), wherein the support surface (46) is formed by a defined contact surface (46) which projects with respect to an adjacent housing region and against which the bearing arrangement (40) bears.

## Revendications

1. Frein à disque (10) pour un véhicule automobile, comprenant
- un boîtier (12),
- un piston déplaçable dans le boitier (12) le long d'un axe longitudinal (A) et
- un agencement de broche et d'écrou (28) venant en prise avec le piston
(26) ou pouvant être amené en prise avec celui-ci,
l'agencement de broche et d'écrou (28) étant disposé dans le boîtier (12) et s'appuyant, par le biais d'un agencement de palier (40) et avec transmission de forces, sur une surface de support (46) du boîtier (12),
**caractérisé en ce que** la surface de support est réalisée par une surface d'appui (46) définie en saillie par rapport à une partie adjacente du boîtier et contre laquelle s'appuie l'agencement de palier (40).

2. Frein à disque (10) selon la revendication 1,
**caractérisé en ce que** la surface de support (46) est réalisée par la face terminale d'une bague d'appui (48) faisant saillie du boîtier dans la direction axiale ou par un palier d'appui.

3. Frein à disque (10) selon la revendication 2,
**caractérisé en ce que** la bague d'appui (48) ou le palier d'appui est disposé de manière adjacente à une contre-dépouille (50) dans le boîtier (12).

4. Frein à disque (10) selon l'une des revendications 1 à 3,
**caractérisé en ce que** l'agencement de palier (40) présente un palier à roulement, en particulier un roulement axial.

5. Frein à disque (10) selon la revendication 4,
**caractérisé en ce que** l'agencement de palier (40) présente un roulement à rouleaux, un roulement à billes ou un roulement à aiguilles.

6. Frein à disque (10) selon l'une des revendications précédentes,
**caractérisé en ce que** l'agencement de palier (40) s'appuie avec une bague de roulement (42) contre la surface de support (46).

7. Frein à disque (10) selon la revendication 6,
**caractérisé en ce que** la surface de support (46) est aussi grande ou préférentiellement plus petite que la face tournée vers elle de la bague de roulement (42).

8. Frein à disque (10) selon l'une des revendications précédentes,
**caractérisé en ce que** la surface de support (46) est réalisée plane, en particulier par usinage de rectification.

9. Boîtier (12) pour un frein à disque (10) selon l'une des revendications précédentes, **caractérisé par** une face de support (46) destinée à un agencement de palier (40), la surface de support (46) étant réalisée par une surface d'appui (46) définie en saillie par rapport à une partie adjacente du boîtier et contre laquelle s'appuie l'agencement de palier (40).
